# EUROPÄISCHE PATENTANMELDUNG

(11) **EP 3 225 654 A1**
(43) Veröffentlichungstag der Anmeldung: **04.10.2017**
(21) Anmeldenummer: 16162825.0
(22) Anmeldetag: 30.03.2016
(51) Int. Cl.: C08J 9/228, C08J 9/16, C08J 9/00, C08L 33/24

(54) **VERKÜRZUNG DER ABKÜHLPHASE BEIM PARTIKELSCHÄUMEN DURCH DIE WÄRMELEITUNG ERHÖHENDE ADDITIVE**

(71) Anmelder: Evonik Röhm GmbH, 64293 Darmstadt (DE)
(72) Erfinder: Bernhard, Kay, 64291 Darmstadt (DE); Liebl, Ina, 64347 Griesheim (DE); Rüppel, Mona, 64739 Hoechst (DE); Trassl, Christian, 95485 Warmensteinach (DE); Richter, Thomas, 64293 Darmstadt (DE); Becker, Florian, 64289 Darmstadt (DE); Holleyn, Denis, 65719 Hofheim am Taunus (DE)

(57) **Zusammenfassung**

Die Erfindung betrifft ein Verfahren zum Schäumen von Polymerpartikeln, insbesondere von Poly(meth)acrylimid- (P(M)I-)Partikeln, die zu Schaumformteilen oder Composites weiterverarbeitet werden können. Das Verfahren zeichnet sich dabei dadurch aus, dass ein Polymergranulat enthaltend die Wärmeleitfähigkeit verbessernde Füllstoffe geschäumt wird. Dieses Granulat kann dabei z.B. in einem Presswerkzeug beim Ausschäumen zu einem Formteil oder einem Composite-Werkstück mit Schaumkern geformt werden.

## Beschreibung

### Gebiet der Erfindung

Die Erfindung betrifft ein Verfahren zum Schäumen von Polymerpartikeln, insbesondere von Poly(meth)acrylimid- (P(M)I-)Partikeln, die zu Schaumformteilen oder Composites weiterverarbeitet werden können. Das Verfahren zeichnet sich dabei dadurch aus, dass ein Polymergranulat, enthaltend die Wärmeleitfähigkeit verbessernde Füllstoffe, geschäumt wird. Dieses Granulat kann dabei z.B. in einem Presswerkzeug beim Ausschäumen zu einem Formteil oder einem Composite Werkstück mit Schaumkern geformt werden.

Das Schäumen von Polymer-, insbesondere von P(M)I-Partikeln in geschlossenen Formen/Werkzeugen ist insbesondere aufgrund der vor der Entnahme aus dem Werkzeug benötigten Abkühlzeit mit langen Prozesszeiten verbunden. Diese werden erfindungsgemäß dadurch verkürzt, dass aufgrund der in den zu schäumenden Partikeln vorliegenden Füllstoffe nach dem Schäumen das Formteil schneller abkühlt.

### Stand der Technik

In DE 27 26 260 wird die Herstellung von Poly(meth)acrylimid-Schäumen (P(M)I-Schäumen) beschrieben, die ausgezeichnete mechanische Eigenschaften auch bei hohen Temperaturen aufweisen. Die Herstellung der Schäume erfolgt im Gussverfahren, d.h. die Monomere und erforderliche Zusatzstoffe werden gemischt und in einer Kammer polymerisiert. Das Polymerisat wird in einem zweiten Schritt durch Erwärmen geschäumt. Diese Verfahren sind sehr aufwendig und kaum zu automatisieren. Insbesondere für P(M)I-Schäume stellen solche Gussverfahren bis heute den relevantesten Stand der Technik dar. Jedoch kann die Formgebung eines solchen Schaumes erst nach dem Schäumen zur Platte erfolgen. Damit sind solche Verfahren, insbesondere für komplexere Formen sehr aufwendig und zeitintensiv.

Neben PMI-Schäumen sind mit ähnlichen Eigenschaften auch Schäume auf Basis von Methacrylsäure und Acrylnitril (PI-Schäume) bekannt. Diese werden beispielsweise in der CN 100420702C beschrieben. Jedoch werden auch diese Schäume zumeist mittels Plattenpolymerisation hergestellt.

Es sind neben diesem Verfahren, das von einer nicht geschäumten Polymerplatte ausgeht, auch so genannte In-Mold-Foaming Prozesse, ausgehend von einem Granulat, bekannt. Gegenüber den beschriebenen Verfahren haben diese jedoch grundsätzlich mehrere Nachteile. So wird nur eine ungleichmäßige Porenstruktur, die sich zwischen dem Inneren der ursprünglichen Partikel und den Grenzflächen zwischen den ursprünglichen Partikeln unterscheidet, erzielt. Weiterhin kann man diesen aus Granulat geschäumten Produkten eine schlechtere Kohäsion an den Grenzflächen, die sich zwischen den ursprünglichen Partikeln beim Schäumen bilden, und damit gegenüber aus einer Halbzeugplatte geschäumten Materialien schlechtere mechanische Eigenschaften beobachten.
In WO 2013/05947 wird ein In-Mold-Verfahren beschrieben, bei dem zumindest letzteres Problem dadurch gelöst wurde, dass die Partikel vor dem Abfüllen in das formgebende Schäumungswerkzeug mit einem Haftvermittler, z.B. mit einem Polyamid oder einem Polymethacrylat beschichtet werden. Damit wird eine sehr gute Korngrenzenhaftung erzielt. Die ungleiche Porenverteilung im Endprodukt wird durch diese Methode jedoch nicht vermieden.

In der WO 2014/076333 ist ein Verfahren beschrieben, bei dem die P(M)I-Partikel zunächst vorgeschäumt werden, bevor diese in eine Form oder ein Werkzeug gefüllt werden, um zum finalen Werkstück ausgeschäumt zu werden. Durch diese Modifikation erhält man Ergebnisse mit einer besseren Dichteverteilung und eine geringere Fehlerquote gegenüber anderen In-Mould-Foaming Prozessen.

Jedoch haben alle diese In-Mould-Foaming Prozesse gemeinsam, dass weiterhin relativ lange Prozesszeiten benötigt werden. Dies ist insbesondere auf die relativ lange Abkühlphase innerhalb des Werkezugs nach dem Ausschäumen zurückzuführen.

### Aufgabe

Vor dem Hintergrund des diskutierten Standes der Technik war es daher Aufgabe der vorliegenden Erfindung, ein neues In-Mould-Foaming Verfahren zur Verfügung zu stellen, mittels dem einfach und mit hoher Durchsatzgeschwindigkeit P(M)I-Partikel zur Verfügung gestellt werden können. Dieses Verfahren soll dabei gegenüber bekannten Verfahren schneller und energiesparend durchführbar sein.

Weiterhin war es Aufgabe der vorliegenden Erfindung ein P(M)I-Material für das In-Mold-Foaming zur Verfügung zu stellen, dass in bereits bekannten Werkzeugen für das In-Mould-Foaming auf- bzw. ausgeschäumt werden kann.

Insbesondere soll das Verfahren insbesondere eine gegenüber dem Stand der Technik besonders verkürzte Abkühlphase innerhalb des Werkzeugs, nach dem Schäumen aufweisen.

Weitere, an dieser Stelle nicht explizit diskutierte Aufgaben, können sich aus dem Stand der Technik, der Beschreibung, den Ansprüchen oder den Ausführungsbeispielen ergeben.

### Lösung

Im Weiteren werden unter der Formulierung Poly(meth)acrylimid Polymethacrylimide, Polyacrylimide oder Mischungen daraus verstanden. Entsprechendes gilt für die entsprechenden Monomere wie (Meth)acrylimid bzw. (Meth)acrylsäure. So werden beispielsweise unter dem Begriff (Meth)acrylsäure sowohl Methacrylsäure als auch Acrylsäure sowie Mischungen aus diesen beiden verstanden.

Gelöst werden die Aufgaben durch ein neuartiges In-Mold-Foaming-Verfahren zur Herstellung von Schaumstoffen, wie zum Beispiel Poly(meth)acrylimid-Schaumstoffen. Dieses Verfahren zeichnet sich dadurch aus, dass Polymerpartikel oder vorgeschäumte Polymerpartikel a) in ein Werkzeug gefüllt, b) bei einer Schäumungstemperatur T₁ geschäumt, c) abgekühlt und d) das fertige Schaumteil bei einer Entnahmetemperatur T₂ entnommen wird. Dabei ist das erfindungsgemäße Verfahren dadurch gekennzeichnet, dass die Polymerpartikel ein Matrixmaterial, mindestens ein Treibmittel und wärmeleitende Füllstoffe aufweisen.

Bevorzugt handelt es sich bei dem Matrixmaterial um Polymethacrylimid (PMI), Polyacrylimid (PI), Polypropylen (PP), ein Polyurethan (PU) oder Polyvinylchlorid (PVC). Bevorzugt handelt es sich um PMI oder PI.

Bei den wärmeleitenden Füllstoffen handelt es sich bevorzugt um Aluminium, Silber, Kupfer, Magnesium, Kohlefasern, Aluminiumoxid, Aluminiumnitrid, Siliciumcarbid, Bornitrid oder um Mischungen aus diesen. Dabei liegen die Füllstoffe bevorzugt in Form von Pulvern, Kugeln, Plättchen, Flakes oder Stäbchen vor. Der am Füllstoff größte zu messende Durchmesser liegt dabei bevorzugt zwischen 100 µm und 5 mm, besonders bevorzugt zwischen 150 µm und 2 mm.

Bei den Treibmitteln handelt es sich bevorzugt um Alkohole, Alkane, Alkene, Ketone, Aldehyde oder um Mischungen aus diesen. Das Treibmittel weist dabei eine Siedetemperatur unter Normaldruck zwischen 35 und 150 °C auf. Die genaue Wahl des Treibmittels kann durch den Fachmann auf Basis des verwendeten Matrixmaterials und den Schäumungsbedingungen einfach ausgewählt werden. So ist auch ein Schäumen unter CO₂-Zugabe durchführbar.

Bezüglich des Vorliegens der Polymerpartikel gibt es erfindungsgemäß verschiedene Ausführungsformen der vorliegenden Erfindung. So können die wärmeleitenden Füllstoffe zumindest teilweise innerhalb des Polymerpartikels befinden. In einer solchen Ausführungsform sind die wärmeleitenden Füllstoffe bevorzugt gänzlich in das Matrixmaterial eingebettet.

In einer zweiten Ausführungsform der vorliegenden Erfindung befinden sich die wärmeleitenden Füllstoffe zwischen den einzelnen Polymerpartikeln. Bevorzugt befinden sich in dieser Ausführungsform die wärmeleitenden Füllstoffe zumindest teilweise auf der Oberfläche des Polymerpartikels. In einer besonderen Variante können die Polymerpartikel mit einem Haftvermittler beschichtet sein oder aber ein partikulärer Haftvermittler befindet sich zwischen den einzelnen Polymerpartikeln. In einer solchen Variante ist es weiterhin möglich, dass die wärmeleitenden Füllstoffe in den Haftvermittler eingebettet sind.

Die Kombination aus verschiedenen, zuvor aufgeführten Ausführungsformen oder Varianten stellen an sich dabei weitere Ausführungsformen der vorliegenden Erfindung da. So können die wärmeleitenden Füllstoffe sich teilweise in den Polymerpartikeln und teilweise zwischen denselben bzw. auf deren Oberfläche befinden.

In einer besonderen Ausführungsform der Erfindung handelt es sich bei den Treibmitteln um eine Mischung, enthaltend mindestens ein Treibmittel, welches unter Schäumungsbedingungen chemisch eine volatile Verbindung freisetzt. Insbesondere ist ein solches Treibmittel ausgewählt aus der Liste tert-Butanol, iso-Propanol, in das Matrixmaterial einpolymerisiertes tert-Butyl(meth)acrylat oder iso-Propyl(meth)acrylat.

Das Schäumen erfolgt bevorzugt bei einer Temperatur T₁ zwischen 120 und 300 °C, besonders bevorzugt zwischen 150 und 280 °C. Die eigentliche Schäumungstemperatur hängt von dem Matrixmaterial und den verwendeten Treibmittels ab.

In einer besonderen Ausführungsform der Erfindung werden nicht geschäumte Polymerpartikel mit Infrarot-Strahlung, die zu mindestens 80% eine Wellenlänge zwischen 1,4 und 10,0 µm, besonders bevorzugt zwischen 5,3 und 6,5 µm oder zwischen 7,8 und 8,9 µm, aufweist, vorgeschäumt, bevor diese vorgeschäumten Partikel in das Werkzeug gefüllt werden. Insbesondere haben die nicht vorgeschäumten Polymerpartikel eine Partikelgröße zwischen 0,5 und 5,0 mm.

In einer bevorzugten Ausführungsform wird das erfindungsgemäße Verfahren dergestalt ausgeführt, dass die nicht vorgeschäumten P(M)I-Partikel auf eine Transportvorrichtung, wie zum Beispiel ein Fließband aufgebracht werden und durch eine Heizstation mit entsprechenden IR-Strahlungsquellen, die insbesondere in dem gewünschten Wellenlängenbereich emittieren, transportiert werden. Um besonders gute Ergebnisse zu erlangen, sollte dabei die Transportvorrichtung derart beladen werden, dass die P(M)I-Partikel einlagig auf dieser liegen und sämtlich direkt erhitzt, zum Beispiel von den IR-Strahlungsquellen bestrahlt werden. Dieses Vorschäumen kann bevorzugt bereits nach 5 min, besonders bevorzugt nach 3 min abgeschlossen sein. Die Vorschäumzeit ergibt sich dabei für die beschriebene Ausführungsform aus der Partikelgröße, der Treibmittelart und -konzentration, der Wellenlänge, dem Abstand zu den Strahlungsquellen und der Strahlungsintensität. Aus der Vorschäumzeit ergibt sich wiederum die einzustellende Transportgeschwindigkeit der Partikel.

Bevorzugt wird das Schäumen innerhalb von höchstens 2 min durchgeführt. Insbesondere werden die Verfahrensschritte a) bis d) zusammen innerhalb von 3 bis 30 min durchgeführt werden. In dieser sehr kurzen Prozesszeit und der sich daraus ermöglichenden hohen Produktionsfrequenz ist gleichzeitig ein großer Vorteil der vorliegenden Erfindung zu sehen.

Als besonders vorteilhaft hat es sich erwiesen, die Partikel in Verfahrensschritt a) in das Werkzeug einzusaugen und/oder eineublasen. Dabei wird das Werkzeug bis zu einem Füllstand zwischen 50 und 100 % mit Partikeln gefüllt.

Bei dem erfindungsgemäßen Werkzeug handelt es sich bevorzugt um ein Formgebungswerkzeug. Für solche Formgebungswerkzeuge gibt es mehrere Varianten. So kann es sich dabei um ein Formgeben des reinen Schaumwerkstoffs mittels eines In-Mold-Foamings handeln. Ein solcher Folgeprozess kann zum Beispiel in EP 2 598 304 nachgelesen werden. Dabei ist es auch möglich, dem Schaum nicht nur eine Form zu geben, sondern diesen gleichzeitig mit Deckmaterialien, wie zum Beispiel Composite-Materialien zu versehen. Somit ist es auf einfache Weise möglich, komplex geformte Schaumkern-Composite-Materialien aus den erfindungsgemäß vorgeschäumten P(M)I-Partikeln herzustellen.

Zusätzlich können zur Verbesserung der Haftung zwischen Schaumkernmaterial und Deckschichten, die in späteren Verfahrensschritten zur Herstellung von Composite-Materialien eine Rolle spielt, Haftvermittler verwendet werden. Diese Haftvermittler können alternativ zu einer Applikation in einem späteren Verfahrensschritt auch schon vor dem erfindungsgemäßen Vorschäumen auf der Oberfläche der Polymerpartikel aufgetragen sein. Als Haftvermittler haben sich insbesondere Polyamide oder Poly(meth)acrylate als geeignet erwiesen. Es können aber auch niedermolekulare Verbindungen, die aus der Herstellung von Compositematerialien, insbesondere in Abhängigkeit vom verwendeten Matrixmaterial der Deckschicht, dem Fachmann bekannt sind, verwendet werden.

Das erfindungsgemäße Verfahren hat insbesondere den großen Vorteil, dass es sehr schnell und damit mit sehr geringen Taktzeiten durchgeführt werden kann. Damit kann das erfindungsgemäße Verfahren sehr gut in einer Serienproduktion integriert werden.

Für das gesamte erfindungsgemäße Verfahren richten sich die zu wählenden Verfahrensparameter nach der im Einzelfall eingesetzten Anlage und deren Auslegung, sowie den eingesetzten Materialien. Sie können durch wenige Vorversuche für den Fachmann leicht ermittelt werden.

Ein erfindungsgemäß bevorzugtes Material ist P(M)I, insbesondere PMI. Solche P(M)I-Schäume werden auch als Hartschäume bezeichnet und zeichnen sich durch eine besondere Festigkeit aus. Die P(M)I-Schäume werden normalerweise in einem zweistufigen Verfahren hergestellt: a) Herstellung eines Gusspolymerisats und b) Aufschäumen dieses Gusspolymerisats. Nach Stand der Technik werden diese dann in die gewünschte Form geschnitten bzw. gesägt. Eine Alternative, die technisch noch weniger etabliert ist, ist das erfindungsgemäß variierte In-Mold-Foaming.

Für das erfindungsgemäße Verfahren werden bevorzugt nicht vorgeschäumte P(M)I-Partikel mit einer Partikelgröße zwischen 0,5 und 5,0 mm, bevorzugt zwischen 1,0 und 4,0 mm eingesetzt.

Diese nicht vorgeschäumten P(M)I-Partikel können in zwei verschiedenen Verfahrensvarianten hergestellt werden, bevor diese in dem erfindungsgemäßen Verfahren eingesetzt werden. In einer ersten Variante werden die P(M)I-Partikel als Granulat durch Mahlen aus einem P(M)I-Halbzeug erhalten. Bei diesem P(M)I-Halbzeug handelt es sich um das zuvor beschriebene, nicht aufgeschäumte Plattenpolymerisat, welches als Gusspolymerisat erhalten wird.

Zur Herstellung des Gusspolymerisats werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomere verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 Gew% bis 2,0 Gew% betragen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

Die Herstellung solcher PMI-Halbzeuge ist dem Fachmann grundsätzlich bekannt und kann beispielsweise in EP 1 444 293, EP 1 678 244 oder WO 2011/138060 nachgelesen werden. Als PMI-Halbzeuge seien insbesondere solche genannt, die in aufgeschäumter Form unter dem Produktnamen ROHACELL^{®} von der Firma Evonik Industries AG vertrieben werden. Bezüglich Herstellung und Verarbeitung sind zu den PMI-Schäumen Acrylimid-Halbzeuge (PI-Halbzeuge) als Analoga anzusehen. Aus toxikologischen Gründen sind diese jedoch gegenüber anderen Schaummaterialien deutlich weniger bevorzugt.

In einer zweiten Variante des erfindungsgemäßen Verfahrens handelt es sich bei den P(M)I-Partikeln um Suspensionspolymerisate, die als solche direkt in das Verfahren eingebracht werden können. Die Herstellung solcher Suspensionspolymerisate kann beispielsweise in DE 18 17 156 oder in der deutschen Patentanmeldung mit dem Anmeldeaktenzeichen 13155413.1 nachgelesen werden.

Bevorzugt weisen die vorgeschäumten P(M)I-Partikel eine Schüttdichte von 40 bis 400 kg/m³, bevorzugt zwischen 60 und 300 kg/m³ und besonders bevorzugt zwischen 80 und 220 kg/m³ auf.

Weiterhin weisen die vorgeschäumten P(M)I-Partikel bevorzugt eine maximale Größe zwischen 1,0 und 25 mm, besonders bevorzugt zwischen 2,0 und 20 mm auf.

Neben dem beschriebenen Verfahren sind auch die beschriebenen, aus diesem Verfahren erhaltenen Schaumstoffe, insbesondere P(M)I-Schäume Bestandteil der vorliegenden Erfindung. Dabei sind diese dadurch gekennzeichnet dass der Schaum Aluminium, Silber, Kupfer, Magnesium, Kohlefasern, Aluminiumoxid, Aluminiumnitrid, Siliciumcarbid, Bornitrid oder Mischungen aus diesen enthält.

Die erfindungsgemäß hergestellten Polymerschäume, insbesondere P(M)I-Schäume können zu Schaumformteilen bzw. Schaumkern-Composite-Materialien weiterverarbeitet werden. Diese Schaumformteilen bzw. Schaumkern-Composite-Materialien können insbesondere Anwendung in der Serienfertigung z.B. für Karosseriebau oder für Innenverkleidungen in der Automobilindustrie, Interieurteile im Schienenfahrzeugs- oder Schiffsbau, in der Luft- und Raumfahrtindustrie, im Maschinenbau, bei der Herstellung von Sportgeräten, beim Möbelbau oder bei der Konstruktion von Windkraftanlagen finden.

## Patentansprüche

1. Verfahren zum In-Mold-Foaming von Polymerpartikeln, **dadurch gekennzeichnet, dass** Polymerpartikel oder vorgeschäumte Polymerpartikel a) in ein Werkzeug gefüllt, b) bei einer Schäumungstemperatur T₁ geschäumt, c) abgekühlt und d) das fertige Schaumteil bei einer Entnahmetemperatur T₂ entnommen wird, wobei die Polymerpartikel ein Matrixmaterial, mindestens ein Treibmittel und wärmeleitende Füllstoffe aufweisen.

2. Verfahren gemäß Anspruch 1, **dadurch gekennzeichnet, dass** es sich bei dem Matrixmaterial um PMI, PI, PP, PU oder PVC, bevorzugt um PMI oder PI handelt.

3. Verfahren gemäß Anspruch 1 oder 2, **dadurch gekennzeichnet, dass** sich die wärmeleitenden Füllstoffe zumindest teilweise innerhalb des Polymerpartikels befinden.

4. Verfahren gemäß einem der Ansprüche 1 bis 3, **dadurch gekennzeichnet, dass** sich die wärmeleitenden Füllstoffe zumindest teilweise auf der Oberfläche des Polymerpartikels befinden.

5. Verfahren gemäß einem der Ansprüche 1 bis 4, **dadurch gekennzeichnet, dass** es sich bei den wärmeleitenden Füllstoffen um Aluminium, Silber, Kupfer, Magnesium, Kohlefasern, Aluminiumoxid, -nitrid, Siliciumcarbid, Bornitrid oder um Mischungen aus diesen handelt.

6. Verfahren gemäß einem der Ansprüche 1 bis 5, **dadurch gekennzeichnet, dass** die Füllstoffe als Pulver, Kugeln, Plättchen, Flakes oder Stäbchen vorliegen.

7. Verfahren gemäß einem der Ansprüche 1 bis 6, **dadurch gekennzeichnet, dass** es sich bei den Treibmitteln um Alkohole, Alkane, Alkene, Ketone, Aldehyde oder um Mischungen aus diesen handelt, und dass das Treibmittel eine Siedetemperatur unter Normaldruck zwischen 35 und 150 °C aufweist.

8. Verfahren gemäß einem der Ansprüche 1 bis 7, **dadurch gekennzeichnet, dass** es sich bei den Treibmitteln um eine Mischung, enthaltend mindestens ein Treibmittel, welches unter Schäumungsbedingungen chemisch eine volatile Verbindung freisetzt, handelt.

9. Verfahren gemäß Anspruch 8, **dadurch gekennzeichnet, dass** es sich bei der das Treibmittel freisetzenden Verbindung um tert-Butanol, iso-Propanol, in das Matrixmaterial einpolymerisiertes tert-Butyl(meth)acrylat oder iso-Propyl(meth)acrylat handelt.

10. Verfahren gemäß einem der Ansprüche 1 bis 9, **dadurch gekennzeichnet, dass** das Schäumen bei einer Temperatur T₁ zwischen 120 und 300 °C erfolgt.

11. Verfahren gemäß einem der Ansprüche 1 bis 9, **dadurch gekennzeichnet, dass** nicht geschäumte Polymerpartikel mit Infrarot-Strahlung, die zu mindestens 80% eine Wellenlänge zwischen 1,4 und 10,0 µm aufweist, vorgeschäumt werden, bevor diese vorgeschäumten Partikel in das Werkzeug gefüllt werden.

12. Verfahren gemäß Anspruch 11, **dadurch gekennzeichnet, dass** die nicht vorgeschäumten Polymerpartikel eine Partikelgröße zwischen 0,5 und 5,0 mm aufweisen.

13. Verfahren gemäß mindestens einem der Ansprüche 1 bis 12, **dadurch gekennzeichnet, dass** das Schäumen innerhalb von höchstens 2 min durchgeführt wird, und dass die Verfahrensschritte a) bis d) zusammen innerhalb von 3 bis 30 min durchgeführt werden.

14. Verfahren gemäß einem der Ansprüche 1 bis 13, **dadurch gekennzeichnet, dass** die Partikel in Verfahrensschritt a) in das Werkzeug eingesaugt und/oder eingeblasen werden, und dass das Werkzeug dabei zu einem Füllstand zwischen 50 und 100 % mit Partikeln gefüllt wird.

15. P(M)I-Schaum, **dadurch gekennzeichnet dass** der P(M)I-Schaum Aluminium, Silber, Kupfer, Magnesium, Kohlefasern, Aluminiumoxid, Aluminiumnitrid, Siliciumcarbid, Bornitrid oder Mischungen aus diesen enthält.

16. Verwendung eines Schaumstoffs, welcher mittels eine Verfahrens gemäß mindestens einem der Patentansprüche 1 bis 14 hergestellt wurde, zur Herstellung von Raum- , Luft- , Wasser-, Schienen-, Landfahrzeugen, Windrädern oder Sportgeräten.
